# EUROPÄISCHE PATENTSCHRIFT

(11) **EP 2 441 986 B1**
(45) Veröffentlichungstag und Bekanntmachung des Hinweises auf die Patenterteilung: **30.12.2015**
(21) Anmeldenummer: 11184798.4
(22) Anmeldetag: 12.10.2011
(51) Int. Cl.: F16J 3/04, F16D 65/00, F16D 55/225, F16D 65/14

(54) **Selbstverstärkende Scheibenbremse**
Self-reinforcing disc brake
Frein à disque à auto-amplification

(30) Priorität: 13.10.2010 DE 102010048327
(43) Veröffentlichungstag der Anmeldung: 18.04.2012
(73) Patentinhaber: KNORR-BREMSE Systeme für Nutzfahrzeuge GmbH, 80809 München (DE)
(72) Erfinder: Baumgartner, Johann, 85368 Moosburg (DE); Trimpe, Robert, 82234 Weßling (DE); Camilo-Martinez, José, 82008 Unterhaching (DE); Peschel, Michael, 82296 Schöngeising (DE)
(74) Vertreter: Mattusch, Gundula

(56) Entgegenhaltungen:
- EP-A2- 2 199 639
- WO-A2-2010/000492
- DE-A1- 19 859 325
- DE-A1-102006 029 942

## Beschreibung

Die vorliegende Erfindung betrifft eine selbstverstärkende Scheibenbremse gemäß dem Oberbegriff des Anspruchs 1.

Eine gattungsgemäße selbstverstärkende Scheibenbremse ist aus der WO 2010/000492 A2 bekannt. Darin ist die Abdichtung im Angriffsbereich des Druckstempels am Spreizlager des Bremsbelages thematisiert, um zu verhindern, dass die Funktionsfähigkeit des Spreizlagers durch im Fahrbetrieb eines Nutzfahrzeuges eindringenden Schmutz oder entstehende Korrosion eingeschränkt ist.

Dazu wird vorgeschlagen, das Spreizlager in Nichtfunktionsstellung der Scheibenbremse, also in ungebremster Position, von einer Dichtungsanordnung einzuschließen, wozu an dem dem Bremsbelag zugewandten Endbereich des Druckstempels ein Dichtring befestigt ist, der am Bremsbelag anliegt.

Da systembedingt bei einer Bremsung sich der Abstand zwischen dem Druckstempel und dem Spreizlager vergrößert, wird der lediglich am Druckstempel befestigte Dichtring gegenüber dem Spreizlager angehoben, so dass die hermetische Abdichtung des gebildeten Innenraumes zwischen dem Druckstempel und dem Spreizlager unterbrochen ist.

In diesem Fall ist eine Abschirmung gegen Spritzwasser und Schmutz nur noch durch die umliegenden Bauteile gegeben.

Für den üblichen Einsatz im Fernverkehr ist diese besonders einfache und außerordentlich robuste Konstruktion völlig ausreichend. In anderen Einsatzgebieten des Fahrzeuges, beispielsweise im Baustellenbetrieb oder bei häufigen Fahrten auf wassergebundenen Fahrbahnen, tritt eine erheblich stärkere Schmutz- und/oder Spritzwasserbeanspruchung auf, die zu Funktionsstörungen des Selbstverstärkungsmechanismus bis hin zum Ausfall der Scheibenbremse führen kann.

Eine weitere, jedoch nicht selbstverstärkende Scheibenbremse ist in der DE 198 59 325 A1 offenbart. Bei dieser Scheibenbremse ist als Dichtungsanordnung ein Faltenbalg vorgesehen, der einerseits das einem Bremsbelag zugewandte Ende der Spindel umschließt und der andererseits an dem Bremsbelag befestigt ist, um ihn an dem als Kalotte ausgebildeten Ende der Stellspindel zu halten.

Der Erfindung liegt die Aufgabe zugrunde, eine Scheibenbremse der gattungsgemäßen Art so weiterzuentwickeln, dass bei jeder Betriebsstellung eine Abdichtung des Raumes zwischen dem Druckstempel und dem Spreizlager gegeben ist.

Diese Aufgabe wird durch eine Scheibenbremse mit den Merkmalen des Anspruchs 1 gelöst.

Durch diese konstruktive Ausbildung kann die Scheibenbremse nun auch ohne Standzeitminderung in Bereichen eingesetzt werden, wo sie einer erhöhten Schmutz- und Spritzwasserbelastung ausgesetzt ist.

Dabei kann der Dichtungsbalg, der bevorzugt aus einem geeigneten Kunststoff besteht, beispielsweise einem Elastomer, aber auch aus einer Metallfolie gebildet sein kann, als Faltenbalg, Rollbalg, Einfaltenbalg, Schlauchbalg oder dergleichen ausgebildet sein.

Bevorzugt liegt der Dichtungsbalg reibschlüssig an dem jeweiligen Bauteil an, wobei im Anlagebereich in den elastischen Werkstoff ein Befestigungsring aus einem formstabilen Material, beispielsweise aus Blech, eingearbeitet sein kann.

Nach einem weiteren Gedanken der Erfindung ist vorgesehen, zusätzlich einen vom Dichtungsbalg umschlossenen Dichtungsring zwischen den einander zugewandten Stirnseiten des Spreizlagers einerseits und des Druckstempels andererseits anzuordnen, so dass in Nichtgebrauchsstellung der Scheibenbremse der gebildete Innenraum zusätzlich abgedichtet ist, entsprechend der bereits erwähnten WO 2010/000492 A2.

Dieser Dichtungsring kann einstückig mit dem Dichtungsbalg ausgebildet sein, wobei der erwähnte Befestigungsring bis in den Anlagebereich des Dichtungsrings geführt ist, um diesen in einer stabilen Position zu halten.

Die Überdeckung des Dichtungsringes durch den Dichtungsbalg gewährleistet einen Schutz des Dichtungsringes gegenüber äußeren Einflüssen.

Der stirnseitig anliegende Dichtungsring kann aus einem an den Befestigungsring anvulkanisierten Elastomer bestehen oder, wenn besondere Anforderungen hinsichtlich einer thermischen Belastbarkeit gefordert sind, aus Metall.

In Kombination mit dem elastischen Dichtungsbalg ergeben sich dadurch optimierte Eigenschaften.

Hervorzuheben ist auch, dass sich die Erfindung mit sehr geringen Kosten realisieren lässt, insbesondere die Montage der neuen Dichtungsanordnung.

Hierzu wird beispielsweise der Dichtungsbalg zunächst an dem dem Spreizlager zugewandten Endbereich des Druckstempels montiert. Beim folgenden Zusammenfügen mit dem belagseitigen Spreizlager bis zur Anlage an eine zwischen dem Druckstempel und dem Spreizlager angeordneten Rollkörper, wird der Befestigungsring des Dichtungsbalges auf den Sitz des belagseitigen Spreizlagers aufgepresst und dabei in eine endgültige, durch den Rollkörper vorgegebene Position vorgeschoben. Die auf den Dichtungsring einwirkende Presskraft entspricht damit der Einpresskraft des Befestigungsringes.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: ein Ausführungsbeispiel der Erfindung in einem Teilausschnitt einer Scheibenbremse in geschnittener Draufsicht
- Figur 2: eine weiteres Ausführungsbeispiel als vergrößerter Teilausschnitt, ebenfalls in einer geschnittenen Draufsicht.

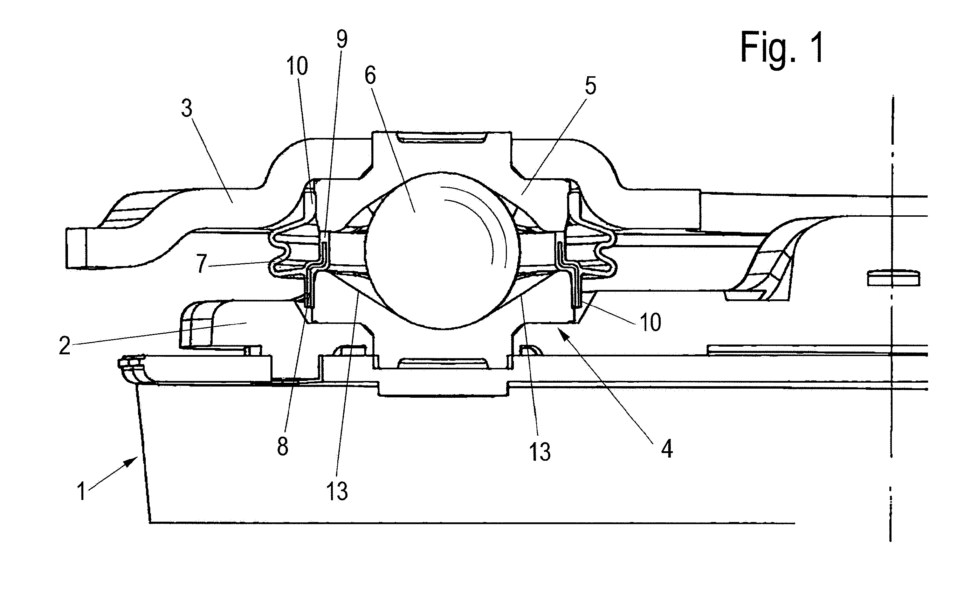

In der Figur 1 ist ein Teil einer selbstverstärkenden Scheibenbremse dargestellt mit einem Bremsbelag 1, der mittels einer Druckplatte 2 gegen eine nicht gezeigte Bremsscheibe pressbar ist.

Hierzu ist ein Druckstempel 5 in eine Führungsplatte 3 eingelassen, während in der Druckplatte 2 ein Spreizlager 4 befestigt ist.

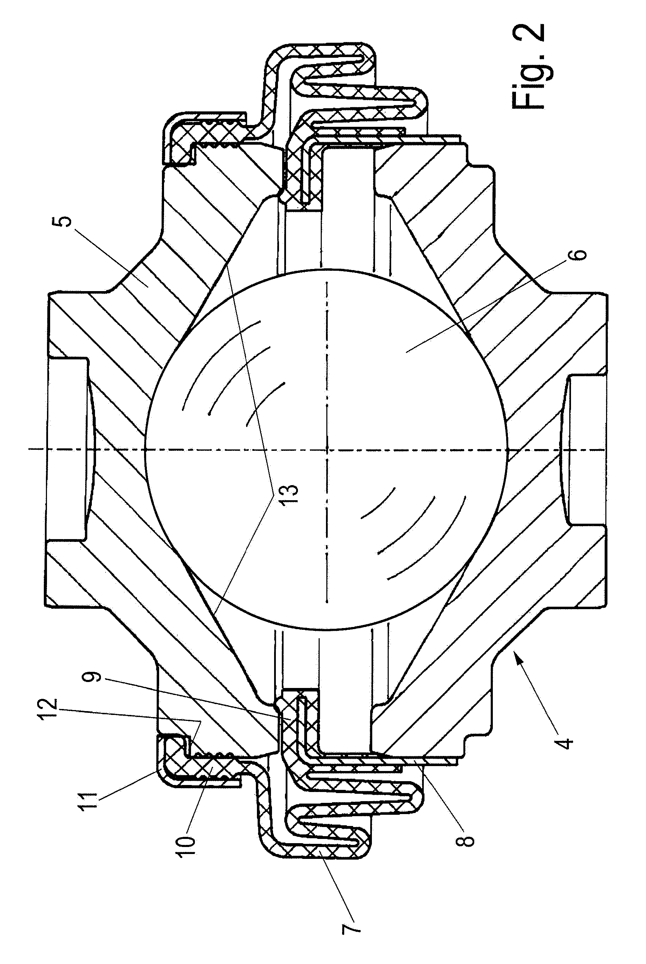

Die dem Spreizlager 4 zugewandte Stirnseite des Druckstempels 5 ist ebenfalls als Spreizlagerung ausgebildet, d.h., es sind jeweils zwei, in Dreh- bzw. Umfangsrichtung der Bremsscheibe gegensinnig ansteigende Rampen vorgesehen, die gemeinsam eine Senke bilden, in denen ein Rollkörper 6 in Form einer Kugel einliegt. Sowohl in der Figur 1 wie auch in der Figur 2 ist die Nichtfunktionsstellung der Scheibenbremse dargestellt, in der der Druckstempel 6 und das Spreizlager 4 mit geringstem Abstand zueinander positioniert sind.

Zur Abdichtung des den Rollkörper 6 aufnehmenden Raumes ist eine Dichtungsanordnung vorgesehen, die einen elastisch verformbaren Dichtungsbalg 7 aufweist, der im Beispiel als Faltenbalg ausgebildet ist und an dem jeweiligen Endbereich einen konzentrischen Dichtrand 10 besitzt, mit dem der Dichtungsbalg 7 einerseits dichtend am Druckstempel 5 und andererseits dichtend am Spreizlager 4 anliegt, jeweils an deren Umfangsfläche. Die Dichtränder 10 können dabei kraft- oder formschlüssig gehalten sein.

Ein an den Dichtungsbalg 7 angeformter Dichtungsring 9 ist in dem durch den Dichtungsbalg 7 gebildeten Innenraum positioniert und durch einen einliegenden Befestigungsring 8, vorzugsweise aus Metall, formstabil ausgebildet.

Dieser Dichtungsring 9 dichtet zusätzlich den eingeschlossenen, den Rollkörper 6 aufnehmenden Raum ab, indem er in Nicht-Betriebsstellung der Bremse, wie sie in den Figuren erkennbar ist, sowohl an der Stirnseite des Druckstempels 5 wie auch an der Stirnseite des Spreizlagers 4 anliegt.

Im Falle einer Bremsung, bei der der Bremsbelag 1 in Drehrichtung gegenüber der Führungsplatte 3 relativ verschoben wird, bei gleichzeitiger Aufspreizung, d.h. Abstandsveränderung zur Führungsplatte 3 durch den Anstieg des Rollkörpers 6 entlang der Rampen 13, öffnet sich die durch den Dichtungsring 9 gebildete Dichtung, während der Dichtungsbalg 7 sowohl die entstehende axiale wie auch radiale Relativbewegung aufgrund seiner Elastizität problemlos mit vollführen kann, ohne Beeinflussung der Dichtwirkung.

Bei dem in der Figur 2 gezeigten Beispiel, das lediglich die Dichtungsanordnung an dem Druckstempel 5 und dem Spreizlager 4 wiedergibt, ist der Dichtungsring 9 so geformt, dass der Druckstempel 5 an einer Breitseite des Dichtungsrings 9 zur Anlage kommt.

Der Dichtungsbalg 7 ist neben der Befestigung am Spreizlager 4 mittels des Befestigungsringes 8 form- und kraftschlüssig am Druckstempel 5 gehalten, wozu ein vorzugsweise anvulkanisierter Klemmring 11 am Dichtrand 10 befestigt ist und beide abgewinkelt an einem Anschlag 12 des Druckstempels 5 anliegen.

Selbstverständlich ist auch eine umgekehrte Anordnung der Dichtung insgesamt möglich, d.h., die formschlüssige Befestigung mittels des Klemmringes 11 in Verbindung mit dem zugeordneten Dichtrand 10 kann am Spreizlager 4 erfolgen, ebenso wie die Festlegung des Dichtringes 9 am Druckstempel 5 vorgesehen sein kann.

Statt am Spreizlager 4 kann der Dichtungsbalg 7 auch direkt an der Druckplatte 2 angeschlossen sein.

### Bezugszeichenliste

- 1: Bremsbelag
- 2: Druckplatte
- 3: Führungsplatte
- 4: Spreizlager
- 5: Druckstempel
- 6: Kugel
- 7: Dichtungsbalg
- 8: Befestigungsring
- 9: Dichtungsring
- 10: Dichtrand
- 11: Klemmring
- 12: Anschlag
- 13: Rampe

## Patentansprüche

1. Selbstverstärkende Scheibenbremse, mit
a) einem an einem ortsfesten Bremsträger gehaltenen Bremssattel, einem zuspannseitigen und einem reaktionsseitigen Bremsbelag (1), die gegen eine Bremsscheibe pressbar sind,
b) einer eine Selbstverstärkungseinrichtung sowie einen betätigbaren, an einer Druckplatte (2) angeschlossenen Bremsstempel aufweisende Zuspanneinrichtung,
c) wobei die Selbstverstärkungseinrichtung mindestens einen Druckstempel (5) aufweist, der über ein Spreizlager (4) stirnseitig an dem zuspannseitigen Bremsbelag (1) anliegt und der mit seinem dem Bremsbelag (1) zugewandten Endbereich in einer im Bremsträger beweglich gehaltenen Führungsplatte (3) festgelegt und
d) das Spreizlager (4) in Nichtfunktionsstellung der Selbstverstärkungseinrichtung von einer Dichtungsanordnung eingeschlossen ist
**dadurch gekennzeichnet, dass**
e) die Dichtungsanordnung, zur Abdichtung des Raumes zwischen dem Druckstempel (5) und dem Spreizlager (4) in jeder Betriebsstellung, einen radial und axial elastisch verformbaren Dichtungsbalg (7) aufweist, der dichtend einerseits am Druckstempel (5) und andererseits an der Druckplatte (2) oder am Spreizlager (4) gehalten ist.

2. Selbstverstärkende Scheibenbremse nach Anspruch 1, **dadurch gekennzeichnet, dass** der Dichtungsbalg (7) an beiden Enden als Dichtrand (10) ausgebildet ist, die form- und/oder kraftschlüssig an der Umfangsfläche des Druckstempels (5) und der Umfangsfläche des Spreizlagers (4) anliegen.

3. Selbstverstärkende Scheibenbremse nach Anspruch 2, **dadurch gekennzeichnet, dass** zumindest ein Dichtrand (10) mittels eines Klemmrings (11) am Druckstempel (5) oder am Spreizlager (4) befestigt ist.

4. Selbstverstärkende Scheibenbremse Anspruch 3, **dadurch gekennzeichnet, dass** der Klemmring (11) durch Anvulkanisation an dem vorzugsweise aus einem Elastomer bestehenden Dichtungsbalg (7) befestigt ist.

5. Selbstverstärkende Scheibenbremse nach einem der vorhergehenden Ansprüche, **dadurch gekennzeichnet, dass** in dem durch den Dichtungsbalg (7) gebildeten Innenraum ein angeformter Dichtungsring (9) vorgesehen ist, der in Nichtfunktionsstellung der Scheibenbremse zumindest an der Stirnseite des Druckstempels (5) oder des Spreizlagers (4) und gegenüberliegend am Spreizlager (4) oder am Druckstempel (5) dichtend anliegt.

6. Selbstverstärkende Scheibenbremse Anspruch 5, **dadurch gekennzeichnet, dass** der Dichtungsring (9) einen formstabilen Befestigungsring (8) aufweist.

7. Selbstverstärkende Scheibenbremse nach Anspruch 6, **dadurch gekennzeichnet, dass** der Befestigungsring (8) das Spreizlager (4) oder den Druckstempel (5) im jeweiligen Endbereich umschließt.

8. Selbstverstärkende Scheibenbremse nach einem der Ansprüche 5 bis 7, **dadurch gekennzeichnet, dass** der Dichtungsring (9) aus Metall besteht.

9. Selbstverstärkende Scheibenbremse nach einem der Ansprüche 5 bis 8, **dadurch gekennzeichnet, dass** der Dichtungsring (9) aus dem gleichen Werkstoff wie der Dichtungsbalg (7) besteht, wobei der Befestigungsring (8) in den Dichtungsring (9) eingebettet ist.

## Claims

1. Self-energising disc brake, comprising
a) a brake calliper held in a stationary adapter, an application-side and a reaction-side brake pad (1), which can be pressed against a brake disc,
b) a self-energising device and an application device having an actuable brake plunger connected to a pressure plate (2),
c) wherein the self-energising device comprises at least one pressure plunger (5), which bears against the application-side brake pad (1) via a spreader bearing (4) at the end face and which is located in a guide plate (3) movably held in the adapter with its end region facing the brake pad (1), and
d) wherein the spreader bearing (4) is enclosed by a seal arrangement in the non-functional position of the self-energising device,
**characterised in that**
e) for sealing the space between the pressure plunger (5) and the spreader bearing (4) in every operating position, the seal arrangement comprises a sealing bellows (7), which is elastically deformable both radially and axially and which, while forming a seal, is held on the pressure plunger (5) on the one hand and on the pressure plate (2) or the spreader bearing (4) on the other hand.

2. Self-energising disc brake according to claim 1, **characterised in that** the sealing bellows (7) is at both ends designed as a sealing edge (10), which bears positively and/or non-positively against the circumferential surface of the pressure plunger (5) and the circumferential surface of the spreader bearing (4).

3. Self-energising disc brake according to claim 2, **characterised in that** at least one sealing edge (10) is secured to the pressure plunger (5) or to the spreader bearing (4) by means of a clamping ring (11).

4. Self-energising disc brake according to claim 3, **characterised in that** the clamping ring (11) is vulcanised to the sealing bellows (7), which is preferably made of an elastomer.

5. Self-energising disc brake according to any of the preceding claims, **characterised in that** an integrally formed sealing ring (9), which bears at least against the end face of the pressure plunger (5) or the spreader bearing (4) and, oppositely, against the spreader bearing (4) or the pressure plunger (5) in the non-functional position of the disc brake while forming a seal, is provided in the interior formed by the sealing bellows (7).

6. Self-energising disc brake according to claim 5, **characterised in that** the sealing ring (9) comprises a dimensionally stable mounting ring (8).

7. Self-energising disc brake according to claim 6, **characterised in that** the mounting ring (8) encompasses the spreader bearing (4) or the pressure plunger (5) in the respective end region.

8. Self-energising disc brake according to any of claims 5 to 7, **characterised in that** the sealing ring (9) is made of metal.

9. Self-energising disc brake according to any of claims 5 to 8, **characterised in that** the sealing ring (9) is made of the same material as the sealing bellows (7), the mounting ring (8) being embedded in the sealing ring (9).

## Revendications

1. Frein à disque à auto-amplification comprenant
a) un étrier de frein tenu à un support de frein stationnaire, une garniture de frein (1) du côté de serrage et une garniture de frein (1) du côté de réaction, qui sont aptes à être pressé contre un disque de frein,
b) un dispositif de serrage comprenant moyen à auto-amplification ainsi qu'un piston ralentisseur, qui peut être activé et qui est relié à une plaque de pression (2),
c) dans lequel ledit moyen à auto-amplification comprend au moins un piston de compression (5) qui porte, via un palier d'expansion, contre ladite garniture de frein (1) du côté de serrage au côté frontal, et qui set fixé par sa région terminale en face de ladite garniture de frein (1) dans une plaque de guidage (3) maintenue de façon mobile dans ledit support de frein, et
d) dans lequel ledit palier d'expansion (4), à la position de non-fonctionnement dudit moyen à auto-amplification, est enfermé par un dispositif d'étanchéité,
**caractérisé en ce**
e) **que** ledit dispositif d'étanchéité comprend un soufflet d'étanchéité élastiquement déformable en sens radial et axial pour assurer l'étanchéité de l'espace entre ledit piston de compression (5) et ledit palier d'expansion (4) en chaque position de service, quel soufflet est maintenu, de façon étanche, audit piston de compression (5), d'un côté, et à ladite plaque de pression (2) ou audit palier d'expansion (4), d'autre côté.

2. Frein à disque à auto-amplification selon la revendication 1, **caractérisé en ce que** ledit soufflet d'étanchéité (7) est configuré sous forme d'un bord d'étanchéité (1^0) aux deux extrémités, qui portent, de force et/ou de forme, contre la surface périphérique dudit piston de compression (5) et la surface périphérique dudit palier d'expansion (4).

3. Frein à disque à auto-amplification selon la revendication 2, **caractérisé en ce qu'**au moins un bord d'étanchéité est fixé moyennant une bague de serrage (11) audit piston de compression (5) ou audit palier d'expansion (4).

4. Frein à disque à auto-amplification selon la revendication 3, **caractérisé en ce que** ladite bague de serrage est fixé par vulcanisation audit soufflet d'étanchéité, qui est fait, de préférence, d'un élastomère.

5. Frein à disque à auto-amplification selon une quelconque des revendications précédentes, **caractérisé en ce que** dans l'espace intérieur formé par ledit soufflet d'étanchéité (7) est disposée une bague d'étanchéité (9) y formée , qui, à une position hors fonction du frein à disque, porte contre le côté frontal dudit piston de compression (5) ou dudit palier d'expansion (4) et, du côté opposé, audit palier d'expansion (4) ou audit piston de compression (5), en assurant l'étanchéité.

6. Frein à disque à auto-amplification selon la revendication 5, **caractérisé en ce que** ladite bague d'étanchéité (9) comprend une bague de fixation (8) ayant une forme stable.

7. Frein à disque à auto-amplification selon la revendication 6, **caractérisé en ce que** ladite bague de fixation (8) renferme ledit palier d'expansion (4) ou ledit piston de compression (5) dans sa région terminale respective.

8. Frein à disque à auto-amplification selon une quelconque des revendications 5 à 7, **caractérisé en ce que** ladite bague d'étanchéité (9) consiste en métal.

9. Frein à disque à auto-amplification selon une quelconque des revendications 5 à 8, **caractérisé en ce que** ladite bague d'étanchéité (9) set faite en le même matériau que ledit soufflet d'étanchéité (7), à ladite bague de fixation (8) étant noyée dans ladite bague d'étanchéité (9).
